(19) Europäisches Patentamt
European Patent Office
Office européen des brevets

(11) EP 1 953 186 B1

(12) **EUROPÄISCHE PATENTSCHRIFT**

(45) Veröffentlichungstag und Bekanntmachung des Hinweises auf die Patenterteilung:
**02.09.2009 Patentblatt 2009/36**

(21) Anmeldenummer: **08000715.6**

(22) Anmeldetag: **16.01.2008**

(51) Int Cl.:
*C08J 5/00* (2006.01) *C08J 5/22* (2006.01)
*C08G 73/00* (2006.01) *C08G 73/08* (2006.01)
*H01M 4/00* (2006.01) *H01M 8/00* (2006.01)
*H01M 8/10* (2006.01)

(54) **Herstellung eines funktionalisierten Polytriazol-Polymers**

Manufacture of a functionalised polytriazol polymer

Fabrication d'un polytriazole polymère fonctionnalisé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.01.2007 DE 102007005666**

(43) Veröffentlichungstag der Anmeldung:
**06.08.2008 Patentblatt 2008/32**

(73) Patentinhaber: **GKSS-Forschungszentrum Geesthacht GmbH**
**21502 Geesthacht (DE)**

(72) Erfinder:
- **Ponce, Mariela Leticia**
**21031 Hamburg (DE)**
- **De Figueiredo Gomes, Dominique**
**21641 Apensen (DE)**
- **Nunes, Suzana**
**21502 Geesthacht (DE)**
- **Abetz, Volker**
**21335 Lüneburg (DE)**

(74) Vertreter: **Seemann, Ralph**
**Patentanwälte**
**Seemann & Partner**
**Ballindamm 3**
**20095 Hamburg (DE)**

(56) Entgegenhaltungen:
**WO-A-20/04030135** **US-A1- 2005 084 727**

- **J.R.HOLSTEN, M.R.LILYQUIST: "Aromatic poly (phenylene)-4-phenyl-1,2,4-triazoles" JOURNAL OF POLYMER SCIENCE: PART A, Bd. 3, 1965, Seiten 3905-3917, XP002480874**
- **K.R.CARTER, R.D.MILLER, J.L.HEDRICK: "Synthesis of 1,2,4-triazole Poly(aryl ethers) via heterocyclic-activated displacement polymerization." MACROMOLECULES, Bd. 26, 1993, Seiten 2209-2215, XP002480875**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 953 186 B1

## Beschreibung

Die Erfindung betrifft ein Verfahren zur Herstellung eines funktionalisierten Polytriazol-Polymers, insbesondere eines Poly(1,2,4-Triazol)-Polymers.

Des Weiteren betrifft die Erfindung ein solches funktionalisiertes Polytriazol-Polymer, das durch ein erfindungsgemäßes Verfahren gewonnen wird.

Außerdem betrifft die Erfindung eine Membran, die ein solches Polymer umfasst, sowie ihre Verwendung in einer Brennstoffzelle und eine Faser, die ein entsprechendes Polymer umfasst.

Polytriazole sind in vielfältigen Bereichen anwendbar. Zu beliebten Anwendungsgebieten zählt die Herstellung von Membranen, die Polytriazole enthalten, für Brennstoffzellen. Polytriazole spielen auch eine wichtige Rolle im Bereich biokompatibler Implantate. Des Weiteren werden sie als Coating-Materialien in unterschiedlichsten Bereichen eingesetzt.

Poly(1,2,4-Triazole) sind heterozyklische Polymere, die seit den vierziger Jahren synthetisiert werden. Aus der Literatur sind zahlreichen Syntheseverfahren für Polymere bekannt, die 4-Phenyl oder 4-Hydro-1,2,4-Triazol-Einheiten enthalten, die meisten von ihnen mit einem geringen Molekulargewicht. Aromatische Poly(4-Aryl-1,2,4-Triazole) mit hohem Molekulargewicht werden im Wesentlichen auf zwei Weisen synthetisiert: Bei Verfahren in einer ersten Weise werden Ditetrazole und Diazidchloride verwendet, die zu Polymeren mit vergleichsweise geringem Molekulargewicht führen. In Verfahren nach einer zweiten, eher bevorzugten Weise erhält man Polymere mit hohen Molekulargewichten, wobei eine Zyklokondensation von Anilin mit hoch molekularen aromatischen Hydraziden in Polyphosphorsäure (PPA) vorgesehen ist.

Ein Verfahren nach der zuletzt genannten Weise wird von Holsten JR, Lilyquist MR in J. Polym. Sci.: Part A Vol. 3 (1965) 3905-3917, beschrieben. Es handelt sich um einen zweistufigen Prozess für die Herstellung von aromatischem Poly(phenylen)4-Phenyl-1,2,4-Triazol. Dabei ist die Zubereitung eines Prepolymers, eines aromatischen Polyhydrazids, durch eine Polykondensation zwischen Terephthaloyl-Chlorid und Isophthaloyl-Dihydrazid vorgesehen. Das zunächst hergestellte Polyhydrazid wird mit Anilin in PPA zyklokondensiert bei Temperaturen zwischen 175°C und 260°C. Die Reaktionszeiten variieren jeweils zwischen 24 Stunden und 140 Stunden. Bei geringeren Temperaturen wird für die Polymere ein Molekulargewicht zwischen 20.000 und 29.000 festgestellt. Die höchsten inhärenten Viskositäten werden erzielt, wenn die Reaktion bei 175°C für 140 Stunden durchgeführt wird. Eine kürzere Reaktionszeit mit höheren Temperaturen resultiert in Polymeren mit geringerer inhärenter Viskosität.

Virpsha, Travnikova, Krongauz, Korshak synthetisieren Polytriazole in einem einstufigen Verfahren, vgl. Vysokomol. Soyed., 1969, A11/1, 69-72. Sie starten mit der direkten Herstellung von Poly-1,3,4-Oxadiazolen durch die Reaktion einer Dicarboxylsäure mit Hydrazinsulfat. Das zwischendurch gebildete Polyoxadiazol wird nicht von der Rektionsmischung abgesondert, Anilin und PPA werden der Mischung zugegeben. Die Erhitzung erfolgt bei ständigem Rühren. Die Bildung von Polyoxadiazol erfolgt bei Temperaturen zwischen 140°C und 180°C und in einem Reaktionszeitraum zwischen 0,5 Stunden und 5 Stunden. Die Polytriazole werden bei Temperaturen zwischen 215°C und 220°C sowie in einem Reaktionszeitraum zwischen 12 Stunden und 35 Stunden gebildet. Das resultierende Polymer erweist sich als unlöslich in organischen Lösemitteln, weist eine reduzierte Viskosität zwischen 0,42 dL/g bis 5,1 dL/g, gemessen in Schwefelsäure, auf, wobei die Werte korrespondierend zu langen Reaktionszeiten geringer werden. Darüber hinaus wird berichtet, dass Resthydrazidgruppen zu beobachten sind.

Vor diesem Hintergrund bestand stets ein Interesse daran, Polytriazole herzustellen, die in organischen Lösungsmitteln löslich sind und keine Resthydrazidgruppen aufweisen, Darüber hinaus sind geringe Reaktionszeiten, geringe Reaktionstemperaturen und hohe resultierende Molekulargewichte wünschenswert.

Bis heute sind nur Polytriazole in einem Eintopfverfahren hergestellt worden, die Resthydrazidgruppen aufweisen und unlöslich in organischen Lösemitteln sind. Des Weiteren sind hierbei hohe Reaktionszeiten, d.h. mindestens zwölf Stunden, und hohe Temperaturen erforderlich. Die Resthydrazidgruppen sind von Nachteil, weil sie weder thermisch noch chemisch stabil sind. Polytriazole, die in organischen Lösemitteln löslich sind, sind in zweistufigem Syntheseverfahren hergestellt worden, die allerdings wesentlich mehr Zeit und hohe Temperaturen erfordern. Dabei müssen zwei Polymere synthetisiert werden, und die resultierenden Molekulargewichte sind geringer. Darüber hinaus treten bei der kommerziellen Herstellung von Polytriazolen in einem zweistufigen Verfahren zusätzliche technische Schwierigkeiten auf.

Aus DE 691 31 529 T2 ist eine lichtempfindliche Harzzusammensetzung bekannt, die für die Bildung eines wärmeresistenten Harzmusters in der Halbleiterfertigung dient. Die Harzzusammensetzung umfasst zum Beispiel auch Polytriazole und ist in organischen Lösungsmitteln wie N-Methyl-2-pyrrolidon, lösbar.

In US 4,933,083 wird eine Kompositmembran zur Trennung von Flüssigkeiten beschrieben, beispielsweise auch zur Verwendung in einer Brennstoffzelle. Die Kompositmembran umfasst unter anderem Polytriazole und wird aus einer Polymerlösung mit N-Methyl-2-pyrrolidon gewonnen.

In US 6,096,898 wird die Herstellung von 1,2,4-Triazolen in einem Eintopfverfahren offenbart.

WO 2004/030135 A2 betrifft Polyazole, protonenleitende Membranen und andere Formkörper aus diesen und deren Verwendung. Bei der Herstellung einer protonenleitenden Membran auf Basis von Polyazolen werden die zugrundeliegenden Monomere in Phosphorsäure suspendiert bzw. gelöst, in eine dünne Form gerakelt und in der Polyphosphorsäure polymerisiert. Bei dem Verfahren werden eine oder mehrere aromatische Tetraaminoverbindungen mit einer oder mehreren Carbonsäuren bzw. deren Estern vermischt, die mindestens zwei Säuregruppen pro Carbonsäuremonomer enthalten, oder eine oder mehrere aromatische und/oder heteroaromatische Diaminocarbonsäuren in Phosphorsäure gemischt unter Ausbildung einer Lösung und/oder Dispersion. Die Lösung und/oder Dispersion wird auf Temperaturen von bis zu 50°C unter Ausbildung des Polyazol-Polymers erwärmt. Es wird mit der Mischung eine Schicht auf einem Träger oder auf einer Elektrode aufgebracht und die so aufgebrachte Schicht behandelt, bis sie eine selbsttragende Membran ist.

In US 2005/0084727 A1 ist eine protonenleitende Elektrolytmembran offenbart, die in einem Verfahren gewinnbar ist, bei dem ein Polymerfilm mit einer Flüssigkeit expandiert wird, die eine Vinyl enthaltende Phosphonsäure enthält, und die Vinyl enthaltende Phosphonsäure polymerisiert wird. Diese Membran ist in Polymerelektrolytmembranen (PEM) und in PEM-Brennstoffzellen einsetzbar.

K.R. Carter et al., Macromolecules 1993, 26, 2209-2215 betrifft die Synthese von 1,2,4-Triazolpoly(arylether) mittels heterozyklischaktivierter Verdrängungspolymerisation. Es wurden verschiedene 3,5-bis(4'-fluorophenyl)-4-aryl-1,2,4-Triazole hergestellt. Die Monomere wurden mit verschiedenen bis-phenolen in hochsiedenden polaren aprotischen Lösungsmitteln in Anwesenheit von Kaliumcarbonat polymerisiert, wobei amorphe Polymere mit hohem Molekulargewicht erhalten wurden, die thermisch stabil und mit üblichen Bearbeitungsbedingungen bearbeitbar waren.

Ausgehend von diesem Stand der Technik ist es Aufgabe der vorliegenden Erfindung, funktionalisierte Polytriazole in einem Verfahren von kurzer Dauer und mit geringeren Temperaturen herzustellen, die gut löslich in organischen Lösemitteln sind und hohe Molekulargewichte aufweisen.

Die Aufgabe wird erfindungsgemäß gelöst durch ein Verfahren zur Herstellung eines funktionalisierten Polytriazol-Polymers, insbesondere eines Poly(1,2,4-Triazol)-Polymers, das sich durch die folgenden Schritte auszeichnet:

a) Mischen eines Hydrazinsalzes, insbesondere Hydrazinsulfat, mit wenigstens einer, insbesondere aromatischen und/oder heteroaromatischen, Dicarboxylsäure und/oder wenigstens einem Dicarboxylsäurederivat in Polyphosphorsäure sowie ggf. weiteren Komponenten zur Gewinnung einer Lösung,

b) Erhitzen der Lösung in einer Schutzgasatmosphäre zur Gewinnung von Polyhydraziden und Zugabe von aromatischen und/oder heteroaromatischen Primäraminen, d.h. Aminen mit einer primären Aminogruppe, zu der Lösung,

c) Ausfällen eines Polymers und ggf. Neutralisation, d.h. Aufhebung der ätzenden Wirkung, in einer Basislösung.

Das Mischungsverhältnis der aromatischen Dicarboxylsäuren zu den heteroaromatischen Dicarboxylsäuren liegt vorzugsweise zwischen 1:99 und 99:1, besonders bevorzugt zwischen 1:50 und 50:1. Diese Verhältnisse sind unabhängig vom Sulfonsäuregehalt der Dicarboxylsäure.

Die in Schritt a) zubereitete Mischung umfasst insbesondere 1 bis 30 Gew.%, bevorzugt 2 bis 15 Gew.%, Monomere für die Zubereitung der Polytriazole.

In einer bevorzugten Ausführungsform des Verfahrens erfolgt in Schritt b) zunächst ein erstes Erhitzen der Lösung in einer Schutzgasatmosphäre zur Gewinnung der Polyhydrazide, dann eine Zugabe der aromatischen und/oder heteroaromatischen Primäramine zu der Lösung und dann ein weiteres Erhitzen der Lösung in der Schutzgasatmosphäre zur Gewinnung der Polytriazole.

Eine weitere Ausführungsform des Verfahrens sieht vor, dass die wenigstens eine Dicarboxylsäure und/oder das wenigstens eine Dicarboxylsäurederivat eine Struktur der Formel

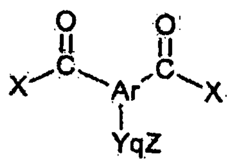

umfasst,
wobei Ar eine aromatische oder heteroaromatische Gruppe, insbesondere mit Substituenten und/oder einem Multiringsystem, wahlweise mit -O-, -CO-, $-C(CH_3)-$, $-C(CF_3)-$ und/oder $-SO_2-$ als Verbindungen zwischen den aromatischen Ringen, darstellt,

X eine Gruppe der Formel $OR^2$, wobei $R^2$ ein Wasserstoffatom oder eine Gruppe mit 1 bis zu 20 Kohlenstoffatomen ist, darstellt,

Y eine Bindung oder eine Gruppe mit 1 bis zu 20 Kohlenstoffatomen darstellt,

Z eine Gruppe der allgemeinen Formel $-SO_3R^1$ oder $-PO(OR^1)_2$ darstellt, wobei $R^1$ ein Wasserstoffatom oder ein Alkalimetall ist, und

q eine ganze Zahl zwischen 0 und 4 ist.

Der Parameter q nimmt bevorzugt den Wert 1 an.

Die Strukturen lassen sich besonders leicht durch die Sulfonierung bekannter und allgemein erhältlicher aromatischer und heteroaromatischer Substanzen gewinnen.

Vorzugsweise umfasst die Mischung mindestens eine aromatische Dicarboxylsäure und ein Hydrazinsalz. Das daraus gebildete Polyhydrazid hat im Allgemeinen die folgende Formel:

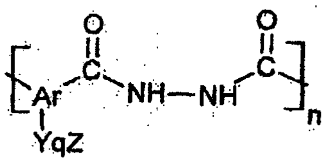

wobei n eine natürliche Zahl ≥ 10, vorzugsweise ≥ 100, ist.

In einer weiteren bevorzugten Variante ist vorgesehen, dass die Lösung in Schritt a) wenigstens eine aromatische Dicarboxylsäure aus der Gruppe 4,4'-Diphenyletherdicarboxylsäure, Isophthalsäure, Terephthalsäure, Phthalsäure, 3-Fluorophthalsäure, 5-Fluoroisophthalsäure, 2-Fluoroterephthalsäure, 1,4-Naphthalendicarboxylsäure, 1,5-Naphthalendicarboxylsäure, 2,6-Naphthalendicarboxylsäure, 2,7-Naphthalendicarboxylsäure, Diphensäure, Benzophenon-4,4'-dicarboxylsäure, Bis(4-dicarboxyl-phenyl)sulfon, Biphenyl-4,4'-dicarboxylsäure, 4-Trifluoromethylphthalsäure, 2,2-bis(4-Carboxyphenyl)hexafluoropropan oder deren C1-C20-Alkylester oder C5-C12-Arylester umfasst.

In einer weiteren vorteilhaften Ausführungsform ist vorgesehen, dass die Lösung in Schritt a) wenigstens eine heteroaromatische Dicarboxylsäure umfasst, die in ihrem aromatischen Ring wenigstens ein Atom aus der Gruppe von Stickstoff, Sauerstoff, Schwefel oder Phosphor umfasst.

Vorzugsweise wird wenigstens eine Dicarboxylsäure aus der Gruppe von Pyridin-2,5-Dicarboxylsäure, Pyridin-3,5-Dicarboxylsäure, Pyridin-2,6-Dicarboxylsäure, Pyridin-2,4-Dicarboxylsäure, 4-Phenyl-2,5-Pyridindicarboxylsäure, 3,5-Pyrazoldicarboxylsäure, 2,6-Pyrimidindicarboxylsäure, 2,5-Pyrazindicarboxylsäure, Benzimidazol-5,6-Dicarboxylsäure oder deren C1-C20-Alkylestern oder C5-C12-Arylestern verwendet.

Das Erhitzen in Schritt b) erfolgt bei Temperaturen, die bis auf 250°C; vorzugsweise bis auf 200°C, steigen, Insbesondere erfolgt das Erhitzen in b) bei Temperaturen im Bereich zwischen 100°C und 190°C, besonders bevorzugt zwischen 150°C und 190°C.

Vorzugsweise wird für die Schutzgasatmosphäre ein Inertgas verwendet, welches ein Edelgas, beispielsweise Argon oder Neon, und/oder Stickstoff ist. Auch eine Mischung verschiedener solcher Gase ist denkbar.

Das Prepolymer in Schritt b) wird vorzugsweise in einem Zeitraum zwischen einer und drei Stunden gewonnen.

Als besonders vorteilhaft erweist sich ein Verfahren, bei dem die aromatischen und/oder heteroaromatischen Primäramine, die insbesondere eine Sulfonsäuregruppe enthalten, eine Struktur der folgenden Formel aufweisen:

$H_2N\text{-}Ar\text{-}YqZ$,

wobei Ar eine aromatische oder heteroaromatische Gruppe, insbesondere mit Substituenten und/oder einem Multiringsystem, wahlweise mit -O-, -CO-, $-C(CH_3)-$, $-C(CF_3)-$ und/oder $-SO_2-$ als Verbindungen zwischen den aromatischen Ringen, darstellt,

Y eine Bindung oder eine Gruppe mit 1 bis zu 20 Kohlenstoffatomen darstellt,

Z eine Gruppe der Formel $-SO_3R^1$ darstellt, wobei $R^1$ ein Wasserstoffatom oder ein Alkalimetall ist, und

q eine ganze Zahl zwischen 0 und 4 ist.

Vorzugsweise liegt das Molverhältnis der aromatischen und/oder heteroaromatischen Primäramine zu den in Schritt b) gewonnenen Polyhydraziden im Wesentlichen bei 1 : 1. Vorteilhaft ist ebenfalls, wenn das Molverhältnis der aromatischen und/oder heteroaromatischen Primäramine zu der Menge an Polyphosphorsäure im Wesentlichen bei 0,4 mol/150 g liegt.

Dabei ist stets von Interesse, besonders hohe Molekulargewichte zu erzielen.

Es erweist sich als Vorteil, wenn ein Primäramin aus der Gruppe von Anilin, 4-Aminobenzensulfonsäure, 3-Aminobenzensulfonsäure, 4-Aminopyridin, 4-Fluoroanilin, 3-Fluoroanilin, 4-Quinolinamin und 4-Bromoanilin verwendet wird.

Eine weitere vorteilhafte Ausführungsform des Verfahrens sieht vor, dass das erste Erhitzen in einem Temperaturbereich zwischen 150°C und 170°C erfolgt und/oder das weitere Erhitzen in einem Temperaturbereich zwischen 170°C und 190°C erfolgt.

Vorzugsweise wird das Polymer in Schritt c) in einem Zeitraum von zwei bis fünf Stunden gewonnen.

Die Aufgabe der Erfindung wird darüber hinaus durch ein funktionalisiertes Polytriazol-Polymer gelöst, das durch ein erfindungsgemäßes Verfahren gewonnen wird, wobei das Molverhältnis N/C von Stickstoff zu Kohlenstoff zwischen 0, 168, und 0,175 liegt.

Das Molverhältnis N/C von Stickstoff zu Kohlenstoff liegt beim funktionalisierten Polytriazol-Polymer vorzugsweise zwischen 0,172 und 0,175.

N/C, das Molverhältnis von Stickstoff zu Kohlenstoff, lässt sich rechnerisch einfach ermitteln. Aus N/C lässt sich dann die Umsetzung von Oxadiazol-Gruppen in Triazolringe nach folgender Gleichung ermitteln:

$$\text{Umsetzung (\%)} = [(N/C - 0{,}167) / 0{,}008] \times 100.$$

Wenn der Wert für N/C = 0,167 ist, bedeutet das, dass 100% des Oxadiazols mit einer Diphenylethergruppe umgesetzt wurde. Nicht umgesetzte Oxadiazolgruppen erweisen sich nicht als nachteilig, da diese Gruppen so stabil wie die Triazolringe sind. Allerdings sind Resthydrazidgruppen nicht erwünscht, da diese Gruppen weder thermisch noch chemisch so stabil wie Oxazolgruppen sind.

Vorzugsweise liegt das Molverhältnis S/C von Schwefel zu Kohlenstoff zwischen 0,18 und 0,400, insbesondere zwischen 0,133 und 0,400 und besonders bevorzugt zwischen 0,235 und 0,400.

S/C, das Molverhältnis von Schwefel zu Kohlenstoff, wird auf rechnerischem Wege einfach ermittelt.

Eine besondere Ausführungsform der Erfindung sieht vor, dass aromatische und/oder heteroaromatische Primäramine mit wenigstens einer Sulfonsäuregruppe verwendet werden. Auf diese Weise lässt sich der Einfluss von Reaktionszeit und Reaktionstemperatur auf das Verhältnis N/C, d.h. die Umsetzung von Prepolymer in Polytriazol, ermitteln. Darüber hinaus lässt sich der Effekt der beiden Parameter Reaktionszeit und Reaktionstemperatur auf S/C, d.h. den Sulfonierungsgrad der Polytriazole, ermitteln.

Das Molekulargewicht des erfindungsgemäßen Polymers liegt vorzugsweise im Bereich von $10^5$ g/mol oder darüber.

Die intrinsische Viskosität des Polymers, gemessen in Dimethylsulfoxid, liegt bevorzugt zwischen 1 und 5 dL/g, besonders bevorzugt zwischen 3 und 4 dL/g.

Das Polymer zeichnet sich insbesondere dadurch aus, dass es gut löslich in aprotischen polaren Lösungsmitteln und in starken Säuren, wie zum Beispiel Schwefel-, Salz- und Phosphorsäure, ist.

Die hohe Viskosität wird insbesondere durch das hohe Molekulargewicht herbeigeführt. Das Polymer umfasst vorzugsweise wiederkehrende Triazoleinheiten mit einem Homopolymer der Formel (I) oder einem Kopolymer der Formel (II), die wenigstens zwei Einheiten enthalten, die sich voneinander unterscheiden. Die Polymere können in Form von Blockcopolymeren (Diblock oder Triblock), in Form von statistischen Copolymeren, periodischen Copolymeren und/oder alternierenden Copolymeren auftreten, wobei auch m eine natürliche Zahl ist.

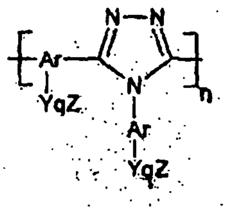 (I) 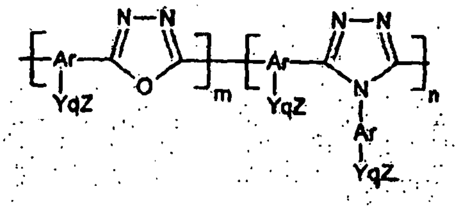 (II)

Die Aufgabe wird darüber hinaus gelöst durch eine Membran und eine Faser, die das erfindungsgemäße Polymer enthalten.

Eine solche Membran ist mit besonderem Vorteil in einer Brennstoffzelle verwendbar.

Die Erfindung wird nachstehend ohne Beschränkung des allgemeinen Erfindungsgedankens anhand zweier Ausführungsbeispiele und anhand einer Zeichnung beschrieben, auf die bezüglich der Offenbarung aller im Text nicht näher erläuterten erfindungsgemäßen Einzelheiten ausdrücklich verwiesen wird. Es zeigen:

Beispiel 1

Polymersynthese

4,4'-Diphenylether-dicarboxylsäure (DPE) und Hydrazinsulfat (HS) reagieren für eine Stunde bei 160°C, dann wird die Reaktionstemperatur auf 180°C erhöht. Danach wird 4-Aminobenzensulfonsäure in das Reaktionsgefäß gegeben, wobei zwei weitere Stunden Reaktionszeit vorgesehen sind. Die molare Löslichkeitsrate (PPA/HS) und die molare Monomerrate (HS/DPE) werden konstant gehalten bei jeweils 10 und 1,2. Ein Molverhältnis von Polyhydrazid, das vor Ort gebildet wird, zu 4-Aminobenzensulfonsäure von 1:1 wird verwendet. Nach Beendigung des Vorgangs wird das Reaktionsmedium in lauwarmes Wasser gegeben, das 5 % Gew./Vol. Natronlauge enthält, um das Polymer auszufällen. Der pH-Wert der Polymersuspension wird mit bekannten Methoden gesteuert, vgl. Gomes et al., Polymer 45 (2004) 4997-5004. Auf diese Weise wird eine dunkelblaue Faser gewonnen, die in destilliertem Wasser zunächst mild gereinigt und anschließend im Vakuumofen für 48 Stunden bei 100°C getrocknet wird. Das Verhältnis N/C des synthetisierten Polymers liegt bei 0,174 und das Verhältnis S/C bei 0,058. Das durchschnittliche Molmassengewicht beträgt 560.000. Mit einem Apparat vom Typ Viscotek SEC wird das durchschnittliche Molekulargewicht der Polymerproben bestimmt. Die Geräteausrüstung wird dabei mit Standard-Polystryrol der Firma Merck kalibriert, das ein durchschnittliches Molgewicht im Bereich zwischen 309 und 944.000 g/mol aufweist. Als Träger wird eine Lösung mit 0,05 M Lithiumbromid in DMAc verwendet. Die Umsetzung von Oxadiazolgruppen in Triazolringe liegt bei 88 %, berechnet nach der obigen Gleichung. Auf diese Weise wird ein Polymer gewonnen, das löslich in organischen Lösemitteln wie NMP, DMSO und DMF ist und keine Resthydrazidgruppen gemäß TGA-FTIR-Analyse aufweist.

Herstellung der Polymermembran

1 g Polymer werden in 14 g N-Methyl-2-pyrrolidon mit 7 Gew. % gelöst. Die Lösung wird 4 Stunden gerührt und auf eine Glasplatte gegossen, zuvor mit Octadecyl-trichlorosilan hydrophob gemacht und auf 65°C erhitzt, um das Lösemittel zu verdampfen. Nach dem Gießen wird die sulfonierte Poly(4-Aryl-1,2,4-Triazol)-Membran im Vakuumofen bei 80°C für 24 Stunden getrocknet. Die Dicke der dunkelblauen Membran beträgt schließlich 90 μm.

Beispiel 2

Polymersynthese

4,4'-Diphenylether-dicarboxylsäure (DPE) und Hydrazinsulfat (HS) reagieren für drei Stunden bei 160°C, dann wird die Reaktionstemperatur auf 180°C erhöht. Danach wird 4-Aminobenzensulfonsäure in das Reaktionsgefäß gegeben, wobei zwei weitere Stunden Reaktionszeit vorgesehen sind. Die molare Löslichkeitsrate (PPA/HS) und die molare Monomerrate (HS/DPE) werden konstant gehalten bei jeweils 10 und 1,2. Ein Molverhältnis von Polyhydrazid, das vor Ort gebildet wird, zu 4-Aminobenzensulfonsäure von 1:1 wird verwendet. Nach Beendigung des Vorgangs wird das Reaktionsmedium in lauwarmes Wasser gegeben, das 5 % Gew./Vol. Natronlauge enthält, um das Polymer auszufällen. Der pH-Wert der Polymersuspension wird mit bekannten Methoden gesteuert, vgl. Gomes et al., Polymer 45 (2004) 4997-5004. Auf diese Weise wird eine Faser gewonnen, die in destilliertem Wasser zunächst mild gereinigt und anschließend im Vakuumofen für 48 Stunden bei 100°C getrocknet wird. Das Verhältnis N/C des synthetisierten Polymers liegt bei 0,173 und das Verhältnis S/C bei 0,094. Das durchschnittliche Molmassengewicht beträgt 230.000. Mit einem Apparat vom Typ Viscotek SEC wird das durchschnittliche Molekulargewicht der Polymerproben bestimmt. Die Umsetzung von Oxadiazolgruppen in Triazolringe liegt bei 75 %, berechnet nach der obigen Gleichung. Auf diese Weise wird ein Polymer gewonnen, das löslich in organischen Lösemitteln wie NMP, DMSO und DMF ist und keine Resthydrazidgruppen gemäß TGA-FTIR-Analyse aufweist.

Herstellung der Polymermembran

1 g Polymer werden in 14 g N-Methyl-2-pyrrolidon mit 7 Gew. % gelöst. Die Lösung wird 4 Stunden gerührt und auf eine Glasplatte gegossen, zuvor mit Octadecyl-trichlorosilan hydrophob gemacht und auf 65°C erhitzt, um das Lösemittel zu verdampfen. Nach dem Gießen wird die Sulfonsäure enthaltende Poly(4-Aryl-1,2,4-Triazol)-Membran im Vakuumofen bei 80°C für 24 Stunden getrocknet. Die Dicke der dunkelgrünen Membran beträgt schließlich 85 μm.

Ein weiteres Ausführungsbeispiel der Erfindung wird in der Figur dargestellt.

Die Figur zeigt zwei alternative Mechanismen A und B zur Herstellung eines funktionalisierten Polytriazol-Polymers unter Verwendung von aromatischen und/oder heteroaromatischen Primäraminen mit mindestens einer Sulfonsäuregruppe. In der Figur wird der Einfluss der Reaktionszeiten $t_1$ und $t_T$ auf N/C, charakteristisch für den Umsetzungsgrad von Prepolymer in Polytriazol, und auf S/C, d.h. den Sulfonierungsgrad der Polytriazole, deutlich. Die erste Reaktionszeit $t_1$ und die gesamte Reaktionszeit $t_T$ sind ausschlaggebende Faktoren für die Größen N/C und S/C. Im Allgemeinen liegt die Reaktionszeit $t_1$ bevorzugt im Bereich zwischen einer und drei Stunden, insbesondere zwischen einer und zwei Stunden. Die gesamte Reaktionszeit $t_T$ liegt vorzugsweise im Bereich zwischen 2 Stunden und 16 Stunden, insbesondere zwischen 2 Stunden und 7 Stunden oder sogar 2 Stunden und 5 Stunden.

Ein großer Wert für $t_1$ wird eine Polymerisation nach dem Mechanismus A begünstigen, d.h. die Synthese von Poly(1,2,4-Triazol) mit hohen Werten für N/C und S/C. Ein kleiner Wert für $t_1$ wird daneben eine Reaktion nach dem Mechanismus B fördern, so dass die beiden Mechanismen A und B gleichzeitig zum Tragen kommen und schließlich ein geringerer Wert für S/C erzielt wird.

**Patentansprüche**

1. Verfahren zur Herstellung eines funktionalisierten Polytriazol-Polymers, insbesondere eines Poly(1,2,4-Triazol)-Polymers, **gekennzeichnet durch** die folgenden Schritte:

   a) Mischen eines Hydrazinsalzes, insbesondere Hydrazinsulfat, mit wenigstens einer, insbesondere aromatischen und/oder heteroaromatischen, Dicarboxylsäure und/oder wenigstens einem Dicarboxylsäurederivat in Polyphosphorsäure sowie ggf. weiteren Komponenten zur Gewinnung einer Lösung,
   b) Erhitzen der Lösung in einer Schutzgasatmosphäre zur Gewinnung von Polyhydraziden und Zugabe von aromatischen und/oder heteroaromatischen Primäraminen zu der Lösung,
   c) Ausfällen eines Polymers und ggf. Neutralisation in einer Basislösung.

2. Verfahren nach Anspruch 1, **dadurch gekennzeichnet, dass** in Schritt b) zunächst ein erstes Erhitzen der Lösung in einer Schutzgasatmosphäre zur Gewinnung der Polyhydrazide, dann eine Zugabe der aromatischen und/oder heteroaromatischen Primäramine zu der Lösung und dann ein weiteres Erhitzen der Lösung in der Schutzgasatmosphäre zur Gewinnung der Polytriazole erfolgt.

3. Verfahren nach Anspruch 1 oder 2, **dadurch gekennzeichnet, dass** die wenigstens eine Dicarboxylsäure und/oder das wenigstens eine Dicarboxylsäurederivat eine Struktur der Formel

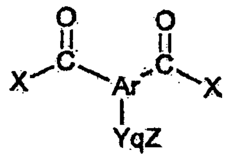

umfasst,
wobei Ar eine aromatische oder heteroaromatische Gruppe, insbesondere mit Substituenten und/oder einem Multiringsystem, wahlweise mit -O-, -CO-, $-C(CH_3)-$, $-C(CF_3)-$ und/oder $-SO_2-$ als Verbindungen zwischen den aromatischen Ringen, darstellt,

X eine Gruppe der Formel $OR^2$, wobei $R^2$ ein Wasserstoffatom oder eine Gruppe mit 1 bis zu 20 Kohlenstoffatomen ist, darstellt,
Y eine Bindung oder eine Gruppe mit 1 bis zu 20 Kohlenstoffatomen darstellt,
Z eine Gruppe der allgemeinen Formel $-SO_3R^1$ oder $-PO(OR^1)_2$ darstellt, wobei $R^1$ ein Wasserstoffatom oder ein Alkalimetall ist, und
q eine ganze Zahl zwischen 0 und 4 ist.

**4.** Verfahren nach einem der Ansprüche 1 bis 3, **dadurch gekennzeichnet, dass** die Lösung in Schritt a) wenigstens eine aromatische Dicarboxylsäure aus der Gruppe 4,4'-Diphenylether-dicarboxylsäure, Isophthalsäure, Terephthalsäure, Phthalsäure, 3-Fluorophthalsäure, 5-Fluoroisophthalsäure, 2-Fluoroterephthalsäure, 1,4-Naphthalendicarboxylsäure, 1,5-Naphthalendicarboxylsäure, 2,6-Naphthalendicarboxylsäure, 2,7-Naphthalendicarboxylsäure, Diphensäure, Benzophenon-4,4'-dicarboxylsäure, Bis(4-dicarboxylphenyl)sulfon, Biphenyl-4,4'-dicarboxylsäure, 4-Trifluoromethylphthalsäure, 2,2-bis(4-Carboxyphenyl)hexafluoropropan oder deren C1-C20-Alkylester oder C5-C12-Arylester umfasst.

**5.** Verfahren nach einem oder mehreren der Ansprüche 1 bis 4, **dadurch gekennzeichnet, dass** die Lösung in Schritt a) wenigstens eine heteroaromatische Dicarboxylsäure umfasst, die in ihrem aromatischen Ring wenigstens ein Atom aus der Gruppe von Stickstoff, Sauerstoff, Schwefel oder Phosphor umfasst.

**6.** Verfahren nach einem oder mehreren der Ansprüche 1 bis 5, **dadurch gekennzeichnet, dass** wenigstens eine Dicarboxylsäure aus der Gruppe von Pyridin-2,5-Dicarboxylsäure, Pyridin-3,5-Dicarboxylsäure, Pyridin-2,6-Dicarboxylsäure, Pyridin-2,4-Dicarboxylsäure, 4-Phenyl-2,5-Pyridindicarboxylsäure, 3,5-Pyrazoldicarboxylsäure, 2,6-Pyrimidindicarboxylsäure, 2,5-Pyrazindicarboxylsäure, Benzimidazol-5,6-Dicarboxylsäure oder deren C1-C20-Alkylestern oder C5-C12-Arylestern verwendet wird.

**7.** Verfahren nach einem oder mehreren der Ansprüche 1 bis 6, **dadurch gekennzeichnet, dass** das Erhitzen in Schritt b) bei Temperaturen im Bereich zwischen 150°C und 190°C erfolgt.

**8.** Verfahren nach einem oder mehreren der Ansprüche 1 bis 7, **dadurch gekennzeichnet, dass** als Inertgas ein Edelgas, beispielsweise Argon oder Neon, und/oder Stickstoff verwendet wird.

**9.** Verfahren nach einem oder mehreren der Ansprüche 1 bis 8, **dadurch gekennzeichnet, dass** das Prepolymer in Schritt b) in einem Zeitraum zwischen einer und drei Stunden gewonnen wird.

**10.** Verfahren nach einem oder mehreren der Ansprüche 1 bis 9, **dadurch gekennzeichnet, dass** die aromatischen und/oder heteroaromatischen Primäramine, die insbesondere eine Sulfonsäuregruppe enthalten, eine Struktur der folgenden Formel aufweisen:

$$H_2N\text{-}Ar\text{-}YqZ,$$

wobei Ar eine aromatische oder heteroaromatische Gruppe, insbesondere mit Substituenten und/oder einem Multiringsystem, wahlweise mit -O-, -CO-, $-C(CH_3)-$, $-C(CF_3)-$ und/oder $-SO_2-$ als Verbindungen zwischen den aromatischen Ringen, darstellt,

Y eine Bindung oder eine Gruppe mit 1 bis zu 20 Kohlenstoffatomen darstellt,
Z eine Gruppe der Formel $-SO_3R^1$ darstellt, wobei $R^1$ ein Wasserstoffatom oder ein Alkalimetall ist, und
q eine ganze Zahl zwischen 0 und 4 ist.

**11.** Verfahren nach einem oder mehreren der Ansprüche 1 bis 10, **dadurch gekennzeichnet, dass** das Molverhältnis der aromatischen und/oder heteroaromatischen Primäramine zu den in Schritt b) gewonnenen Polyhydraziden im Wesentlichen 1 : 1 beträgt und/oder dass das Molverhältnis der aromatischen und/oder heteroaromatischen Primäramine zu der Menge an Polyphosphorsäure im Wesentlichen 0,4 mol/150 g beträgt.

**12.** Verfahren nach einem oder mehreren der Ansprüche 1 bis 11, **dadurch gekennzeichnet, dass** ein Primäramin aus der Gruppe von Anilin, 4-Aminobenzensulfonsäure, 3-Aminobenzensulfonsäure, 4-Aminopyridin, 4-Fluoroanilin,

3-Fluoroanilin, 4-Quinolinamin und 4-Bromoanilin verwendet wird.

**13.** Verfahren nach einem oder mehreren der Ansprüche 2 bis 12, **dadurch gekennzeichnet, dass** das erste Erhitzen in einem Temperaturbereich zwischen 150°C und 170°C und/oder das weitere Erhitzen in einem Temperaturbereich zwischen 170°C und 190°C erfolgt.

**14.** Verfahren nach einem oder mehreren der Ansprüche 1 bis 13, **dadurch gekennzeichnet, dass** das Polymer in Schritt c) in einem Zeitraum von zwei bis fünf Stunden gewonnen wird.

**15.** Funktionalisiertes Polytriazol-Polymer, welches durch ein Verfahren nach einem oder mehreren der Ansprüche 1 bis 14 gewonnen wird, wobei das Molverhältnis N/C von Stickstoff zu Kohlenstoff zwischen 0,168 und 0,175 liegt.

**16.** Polymer nach Anspruch 15, **dadurch gekennzeichnet, dass** das Molverhältnis N/C von Stickstoff zu Kohlenstoff zwischen 0,172 und 0,175 liegt.

**17.** Polymer nach Anspruch 15 oder 16, **dadurch gekennzeichnet, dass** das Molverhältnis S/C von Schwefel zu Kohlenstoff zwischen 0,018, vorzugsweise 0,133 und besonders bevorzugt 0,235, und 0,400 liegt.

**18.** Polymer nach einem der Ansprüche 15 bis 17, **dadurch gekennzeichnet, dass** das Molekulargewicht ungefähr im Bereich von $10^5$ g/mol oder darüber liegt.

**19.** Polymer nach einem oder mehreren der Ansprüche 15 bis 18, **dadurch gekennzeichnet, dass** die intrinsische Viskosität, gemessen in Dimethylsulfoxid, im Bereich zwischen 1 und 5 dL/g, bevorzugt zwischen 3 und 4 dL/g, liegt.

**20.** Polymer nach einem oder mehreren der Ansprüche 15 bis 19, **dadurch gekennzeichnet, dass** es gut löslich in aprotischen polaren Lösungsmitteln und in starken Säuren, wie zum Beispiel Schwefel-, Salz- und Phosphorsäure, ist.

**21.** Membran, **dadurch gekennzeichnet, dass** sie ein Polymer nach einem oder mehreren der Ansprüche 15 bis 20 umfasst.

**22.** Verwendung einer Membran nach Anspruch 21 in einer Brennstoffzelle.

**23.** Faser, **dadurch gekennzeichnet, dass** sie ein Polymer nach einem oder mehreren der Ansprüche 15 bis 20 umfasst.

## Claims

**1.** A method of producing a functionalised polytriazole polymer, particularly a poly (1, 2, 4-triazole) polymer, **characterised by** the following steps:

a) Mixing a hydrazine salt, particularly hydrazine sulphate, with at least one, particularly aromatic and/or hetroaromatic, dicarboxylic acid and/or at least one dicarboxylic acid derivative in polyphosphoric acid and optionally further components to produce a solution,
b) Heating the solution in a protective gas atmosphere to produce polyhydrazides and adding aromatic and/or heteroaromatic primary amines to the solution,
c) Precipitating a polymer and optionally neutralising in a basic solution.

**2.** A method as claimed in claim 1, **characterised in that** in step b) firstly a first heating of the solution is effected in a protective gas atmosphere to produce the polyhydrazides, then an addition of the aromatic and/or heteroaromatic primary amines to the solution and then a further heating of the solution in the protective gas atmosphere to produce the polytriazoles.

**3.** A method as claimed in claim 1 or 2, **characterised in that** the at least one dicarboxylic acid and/or the at least one dicarboxylic acid derivative has a structure of the formula.

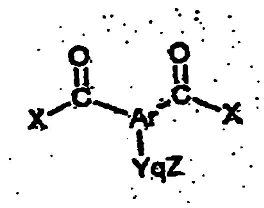

Wherein Ar represents an aromatic or heteroaromatic group, particularly with substituents and/or a multi-ring system, selectively with -0-, -CO-, $-C(CH_3)-$, $-C(CF_3)-$ and/or $-SO_2-$ as connections between the aromatic rings,

X represents a group of the formula $OR^2$, wherein $R^2$ is a hydrogen atom or a group with one to 20 carbon atoms,
Y represents a bond or a group with 1 to 20 carbon atoms,
Z represents a group of the general formula - $SO_3R^1$ or $PO(OR^1)_2$, wherein $R^1$ is a hydrogen atom or an alkali metal, and
q is a whole number between 0 and 4.

**4.** A method as claimed in one of claims 1 to 3, **characterised in that** the solution in step a) includes at least one aromatic dicarboxylic acid from the group 4,4'- diphenylether dicarboxylic acid, isophthalic acid, terephthalic acid, phthalic acid, 3-fluorophthalic acid, 5-fluoroisophthalic acid, 2-fluoroterephthalic acid, 1,4-naphthalene dicarboxylic acid, 2,6-naphthalene dicarboxylic acid, 2,7-naphthalene dicarboxylic acid, diphenic acid, benzophenone-4,4'-dicarboxylic acid, bis (4-dicarboxyphenyl) sulphone, biphenyl-4,4'-dicarboxylic acid, 4-trifluoromethylphthalic acid, 2,2-bis(4-carboxyphenyl) hexafluoropropane or their C1-C20-alkaly esters or C5-C12 aryl esters.

**5.** A method as claimed in one or more of claims 1 to 4, **characterised in that** the solution in step a) includes at least one heteroaromatic dicarboxylic acid, which includes in its aromatic ring at least one atom from the group of nitrogen, oxygen, sulphur or phosphorus.

**6.** A method as claimed in one or more of claims 1 to 5, **characterised in that** at least one carboxylic acid is used from the group of pyridine-3,5-dicarboxylic acid, pyridine-2,6-dicarboxylic acid, pyridine-2,4-dicarboxylic acid, 4-phenyl-2,5-pyridine dicarboxylic acid, 3,5-pyrazole dicarboxylic acid, 2,6-pyrimidine dicarboxylic acid, 2,5-pyrazine dicarboxylic acid, benzimidazole-5,6-dicarboxylic acid or their C1-C20-alkayl esters or C5-C12-aryl esters.

**7.** A method as claimed in one or more of claims 1 to 6, **characterised in that** the heating in step b) is effected at temperatures in the range between 150°C and 190°C.

**8.** A method as claimed in one or more of claims 1 to 7, **characterised in that** a noble gas, for instance argon or neon, and/or nitrogen is used as the inert gas.

**9.** A method as claimed in one ore more of claims 1 to 8, **characterised in that** the prepolymer in step b) is produced in a period of time of between one and three hours.

**10.** A method as claimed in one or more of claims 1 to 9, **characterised in that** the aromatic and/or heteroaromatic primary amines, which contain, in particular, a sulphonic acid group, have a structure of the following formula:

$$H_2N\text{-}Ar\text{-}YqZ,$$

wherein Ar represents an aromatic or heteroaromatic group, particularly with substituents and/or a multi-ring system, selectively with -0-, -CO-, $-C(CH_3)-$, $-C(CF_3)-$, and/or $-SO_2-$ as connections between the aromatic rings,

Y represents a bond or a group with 1 to 20 carbon atoms,
Z represents a group of the general formula - $SO_3R^1$ or $-PO(OR^1)_2$, wherein $R^1$ is a hydrogen atom or an alkali metal, and
q is a whole number between 0 and 4.

**11.** A method as claimed in one or more of claims 1 to 10, **characterised in that** the molar ratio of the aromatic and/or heteroaromatic primary amines to the polyhyrdazides produced in step b) is substantially 1:1 and/or the molar ratio of the aromatic and/or heteroaromatic primary amines to the amount of polyphosphoric acid is substantially 0.4 mol/150 g.

**12.** A method as claimed in one or more of claims 1 to 11, **characterised in that** a primary amine is used from the group of aniline, 4-aminobenzenesulphonic acid, 3-aminobenzenesulphonic acid, 4-aminopyridine, 4-fluoroaniline, 3-fluoroaniline, 4-quinolinamine and 4-bromoaniline.

**13.** A method as claimed in one or more of claims 1 to 12, **characterised in that** the first heating occurs in a temperature range between 150°C and 170°C and/or the further heating occurs in a temperature range between 170°C and 190°C.

**14.** A method as claimed in one or more of claims 1 to 13, **characterised in that** the polyer in step c) is produced in a period of time of two to five hours.

**15.** A functionalised polytriazole polymer, which is produced by a method as claimed in one or more of claims 1 to 14, wherein the molar ratio N/C of nitrogen to carbon is between 0.168 and 0.175.

**16.** A polymer as claimed in claim 15, **characterised in that** the molar ratio N/C of nitrogen to carbon is between 0.172 and 0.175.

**17.** A polymer as claimed in claim 15 or 16, **characterised in that** the molar ratio S/C of sulphur to carbon is between 0.018, preferably 0.133 and particularly preferably 0.235, and 0.400.

**18.** A polymer as claimed in one of claims 15 to 17, **characterised in that** the molecular weight is approximately in the range of $10^5$ g/mol or above.

**19.** A polymer as claimed in one or more of claims 15 to 18, **characterised in that** the intrinsic viscosity, measured in dimethyl sulphoxide, is in the range between 1 and 5 dL/g, preferably between 3 and 4 dL/g.

**20.** A polymer as claimed in one or more of claims 15 to 19, **characterised in that** it is easily soluble in aprotic polar solvents and in strong acids, such as sulphuric acid, hydrochloric acid and phosphoric acid.

**21.** A membrane, **characterised in that** it includes a polymer as claimed in one or more of claims 15 to 20.

**22.** The use of a membrane as claimed in claim 21 in a fuel cell.

**23.** A fibre, **characterised in that** it includes a polymer as claimed in one or more of claims 15 to 20.

## Revendications

**1.** Procédé de préparation d'un polymère polytriazole fonctionnalisé, en particulier d'un polymère poly(1,2,4-triazole), **caractérisé par** les étapes suivantes :

a) mélange d'un sel d'hydrazine, en particulier le sulfate d'hydrazine, à au moins un acide dicarboxylique, en particulier aromatique et/ou hétéroaromatique, et/ou à au moins un dérivé d'acide dicarboxylique dans de l'acide polyphosphorique, et éventuellement d'autres composants, pour obtenir une solution,
b) chauffage de la solution dans une atmosphère d'un gaz inerte pour obtenir des polyhydrazides, et addition d'amines primaires aromatiques et/ou hétéroaromatiques à la solution,
c) séparation par précipitation d'un polymère et éventuellement neutralisation dans une solution de base.

**2.** Procédé selon la revendication 1, **caractérisé en ce que**, dans l'étape b), on procède d'abord à premier chauffage de la solution dans une atmosphère d'un gaz inerte pour obtenir les polyhydrazides, puis on procède à une addition des amines primaires aromatiques et/ou hétéroaromatiques à la solution, puis on procède à un chauffage supplémentaire de la solution dans l'atmosphère d'un gaz inerte pour obtenir les polythriazoles.

**3.** Procédé selon la revendication 1 ou 2, **caractérisé en ce que** l'au moins un acide dicarboxylique et/ou l'au moins un dérivé d'acide dicarboxylique a une structure de formule

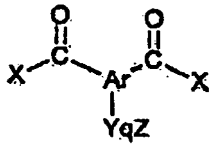

dans laquelle Ar est un groupe aromatique ou hétéroaromatique, en particulier avec des substituants et/ou un système polycyclique, au choix avec -O-, -CO-, $-C(CH_3)-$, $-C(CF_3)-$ et/ou $-SO_2-$, servant de liaisons entre les noyaux aromatiques,

X est un groupe de formule $OR^2$, dans laquelle $R^2$ est un atome d'hydrogène ou un groupe ayant de 1 à 20 atomes de carbone,
Y est une liaison ou un groupe ayant 1 à 20 atomes de carbone,
Z est un groupe de formule générale $-SO_3R^1$ ou $-PO(OR^1)_2$, dans laquelle $R^1$ est un atome d'hydrogène ou un métal alcalin, et
q est un nombre entier entre 0 et 4.

**4.** Procédé selon l'une des revendications 1 à 3, **caractérisé en ce que** la solution de l'étape a) comprend au moins un acide dicarboxylique aromatique du groupe comprenant l'acide 4,4'-diphénylétherdicarboxylique, l'acide isophtalique, l'acide téréphtalique, l'acide phtalique, l'acide 3-fluorophtalique, l'acide 5-fluoroisophtalique, l'acide 2-fluorotéréphtalique, l'acide 1,4-naphtalènedicarboxylique, l'acide 1,5-naphtalènedicarboxylique, l'acide 2,6-naphtalènedicarboxylique, l'acide 2,7-naphtalènedicarboxylique, l'acide diphénique, l'acide benzophénone-4,4'-dicarboxylique, la bis(4-dicarboxyl-phényl)sulfone, l'acide biphényle-4,4'-dicarboxylique, l'acide 4-trifluoro-méthylphtalique, le 2,2-bis(4-carboxyphényl)hexafluoropropane ou leurs esters alkyliques en $C_1$-$C_{20}$ ou leurs esters aryliques en $C_5$-$C_{12}$.

**5.** Procédé selon l'une ou plusieurs des revendications 1 à 4, **caractérisé en ce que** la solution de l'étape a) comprend au moins un acide dicarboxylique aromatique, qui dans son noyau aromatique comprend au moins un atome du groupe consistant en l'azote, l'oxygène, le soufre ou le phosphore.

**6.** Procédé selon l'une ou plusieurs des revendications 1 à 5, **caractérisé en ce qu'**on utilise au moins un acide dicarboxylique du groupe comprenant l'acide pyridine-2,5-dicarboxylique, l'acide pyridine-3,5-dicarboxylique, l'acide pyridine-2,6-dicarboxylique, l'acide pyridine-2,4-dicarboxylique, l'acide 4-phényl-2,5-pyridinedicarboxylique, l'acide 3,5-pyrazoledicarboxylique, l'acide 2,6-pyrimidinedicarboxylique, l'acide 2,5-pyrazinedicarboxylique, l'acide benzimidazole-5,6-dicarboxylique ou leurs esters alkyliques en $C_1$-$C_{20}$ ou leurs esters aryliques en $C_5$-$C_{12}$.

**7.** Procédé selon l'une ou plusieurs des revendications 1 à 6, **caractérisé en ce que** le chauffage de l'étape b) est réalisé à des températures comprises dans la plage de 150 à 190°C.

**8.** Procédé selon l'une ou plusieurs des revendications 1 à 7, **caractérisé en ce qu'**on utilise en tant que gaz inerte un gaz rare, par exemple l'argon ou le néon, et/ou l'azote.

**9.** Procédé selon l'une ou plusieurs des revendications 1 à 8, **caractérisé en ce que** le prépolymère de l'étape b) est obtenu en un laps de temps compris entre une et trois heures.

**10.** Procédé selon l'une ou plusieurs des revendications 1 à 9, **caractérisé en ce que** les amines primaires aromatiques et/ou hétéroaromatiques, qui en particulier contiennent un groupe acide sulfonique, ont une structure ayant la formule suivante :

$$H_2N\text{-}Ar\text{-}YqZ,$$

dans laquelle Ar est un groupe aromatique ou hétéroaromatique, en particulier avec des substituants et/ou un système polycyclique, au choix avec -O-, -CO-, $-C(CH_3)-$, $-C(CF_3)-$ et/ou $-SO_2-$ en tant que liaisons entre les noyaux aromatiques,

Y est une liaison ou un groupe ayant 1 à 20 atomes de carbone,
Z est un groupe de formule $-SO_3R^1$ dans laquelle $R^1$ est un atome d'hydrogène ou un métal alcalin, et

q est un nombre entier de 0 à 4.

11. Procédé selon l'une ou plusieurs des revendications 1 à 10, **caractérisé en ce que** le rapport en moles entre les amines primaires aromatiques et/ou hétéroaromatiques et les polyhydrazides obtenus dans l'étape b) est pour l'essentiel de 1:1 et/ou que le rapport en moles des amines primaires aromatiques et/ou hétéroaromatiques à la quantité de l'acide polyphosphorique est pour l'essentiel de 0,4 mole/150 g.

12. Procédé selon l'une ou plusieurs des revendications 1 à 11, **caractérisé en ce qu'**on utilise une amine primaire du groupe consistant en l'aniline, l'acide 4-aminobenzènesulfonique, l'acide 3-aminobenzènesulfonique, la 4-aminopyridine, la 4-fluoroaniline, la 3-fluoroaniline, la 4-quinoléine-amine et la 4-bromoaniline.

13. Procédé selon l'une ou plusieurs des revendications 2 à 12, **caractérisé en ce que** le premier chauffage est effectué dans une plage de températures de 150 à 170°C et/ou que le chauffage supplémentaire est effectué dans une plage de températures de 170 à 190°C.

14. Procédé selon l'une ou plusieurs des revendications 1 à 13, **caractérisé en ce que** le polymère de l'étape c) est obtenu en un laps de temps de deux à cinq heures.

15. Polymère polytriazole fonctionnalisé, qui est obtenu par un procédé selon l'une ou plusieurs des revendications 1 à 14, le rapport en moles N/C de l'azote au carbone étant compris entre 0,168 et 0,175.

16. Polymère selon la revendication 15, **caractérisé en ce que** le rapport en moles N/C de l'azote au carbone est compris entre 0,172 et 0,175.

17. Polymère selon la revendication 15 ou 16, **caractérisé en ce que** le rapport en moles S/C du soufre au carbone est compris entre 0,018, de préférence 0,133 et d'une manière particulièrement préférée 0,235, et 0,400.

18. Polymère selon l'une des revendications 15 à 17, **caractérisé en ce que** la masse moléculaire est approximativement de l'ordre de $10^5$ g/mole ou plus.

19. Polymère selon l'une ou plusieurs des revendications 15 à 18, **caractérisé en ce que** la viscosité intrinsèque, mesurée dans du diméthyl-sulfoxyde, est comprise dans la plage de 1 à 5 dl/g, de préférence de 3 à 4 dl/g.

20. Polymère selon l'une ou plusieurs des revendications 15 à 19, **caractérisé en ce qu'**il est bien soluble dans des solvants aprotiques polaires et dans des acides forts tels en particulier que l'acide sulfurique, l'acide chlorhydrique et l'acide phosphorique.

21. Membrane, **caractérisée en ce qu'**elle comprend un polymère selon l'une ou plusieurs des revendications 15 à 20.

22. Utilisation d'une membrane selon la revendication 21 dans une pile à combustible.

23. Fibre, **caractérisée en ce qu'**elle comprend un polymère selon l'une ou plusieurs des revendications 15 à 20.

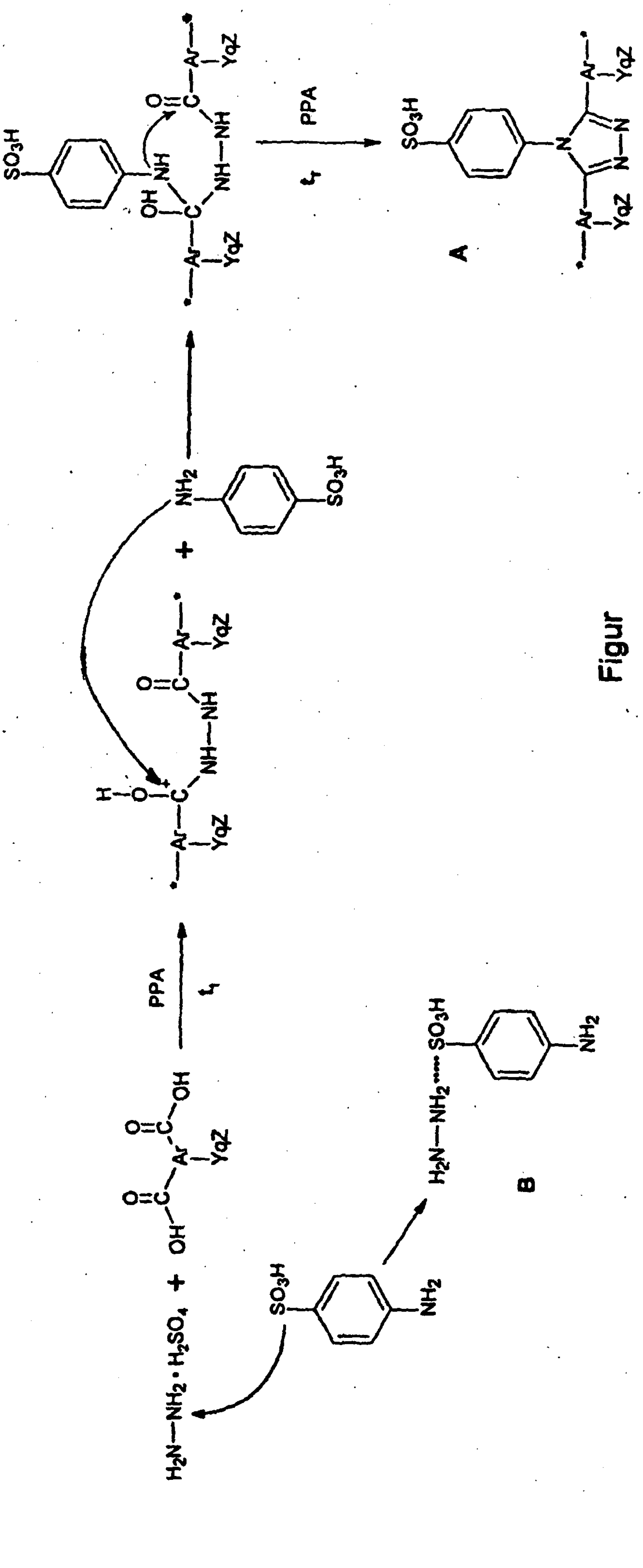


Figur

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 69131529 T2
- US 4933083 A
- US 6096898 A
- WO 2004030135 A2
- US 20050084727 A1


### In der Beschreibung aufgeführte Nicht-Patentliteratur


- **Holsten JR ; Lilyquist MR.** *J. Polym. Sci.: Part A,* 1965, vol. 3, 3905-3917
- *Verfahren, vgl. Vysokomol. Soyed.,* 1969, vol. A11/1, 69-72
- **K.R. Carter et al.** *Macromolecules,* 1993, vol. 26, 2209-2215
- **Gomes et al.** *Polymer,* 2004, vol. 45, 4997-5004